# EUROPÄISCHE PATENTSCHRIFT

(11) **EP 0 446 960 B1**
(45) Veröffentlichungstag und Bekanntmachung des Hinweises auf die Patenterteilung: **22.09.1993**
(21) Anmeldenummer: 91105234.8
(22) Anmeldetag: 21.09.1988
(51) Int. Cl.: B23P 13/00, B23Q 7/00

(54) **Verfahren zum Herstellen einer Palette zum Aufnehmen von Werkstücken**
Method of manufacture of a pallet for receiving a workpiece
Méthode pour la manufacture d'une palette pour la réception d'une pièce de travail

(30) Priorität: 24.09.1987 DE 3732206; 26.04.1988 DE 3814102
(43) Veröffentlichungstag der Anmeldung: 18.09.1991
(62) Teilanmeldung aus: 88115510.5
(73) Patentinhaber: Büchler B-SET AG, CH-9230 Flawil (CH)
(72) Erfinder: Büchler, René, CH-9345 Oberbüren (CH)
(74) Vertreter: EGLI-EUROPEAN PATENT ATTORNEYS

(56) Entgegenhaltungen:
- DE-A- 3 703 806
- DE-B- 1 093 249
- DE-B- 1 286 932

## Beschreibung

Die vorliegende Erfindung betrifft ein Verfahren zum Herstellen einer Palette zum Aufnehmen von Werkstücken.

Aus dem DE-GM 87 01 619.2 der Anmelderin ist bereits eine Palette zum Aufnehmen von Werkstücken bekannt, die ihrerseits gegenüber einem Maschinentisch hochgenau festlegbar ist. Sowohl die Palette wie auch der Maschinentisch sind aus einem hochwertigen Maschinenstahl gefertigt. Die Herstellung solcher Paletten, von denen für jede Werkzeugmaschine eine relativ hohe Anzahl benötigt wird, ist aufgrund des aufwendig zu bearbeitenden Maschinenstahles relativ kostspielig. Eine weitere Problematik ergibt sich aus dem relativ hohen Eigengewicht einer aus Maschinenstahl gefertigten Palette.

Der Erfindung liegt daher die Aufgabe zugrunde, eine leichter handhabbare und einfacher herstellbare Palette zu schaffen, die dennoch eine hohe Auflagegenauigkeit eines Werkzeugs auf ihrer Oberfläche ermöglicht.

Diese Aufgabe wird durch ein Verfahren gemäß Patentanspruch 1 gelöst.

Bevorzugte Weiterbildungen sind in den Unteransprüchen angegeben.

Bevorzugte Ausführungsformen der erfindungsgemäßen Palette werden nachfolgend unter Bezugnahme auf die beiliegenden Zeichnungen näher erläutert. Es zeigen:
- Fig. 1: eine perspektivische Darstellung einer Ausführungsform der erfindungsgemäßen Palette; und
- Fig. 2: eine Teilansicht der gerasterten oberen Fläche der Palette gemäß Fig. 1.

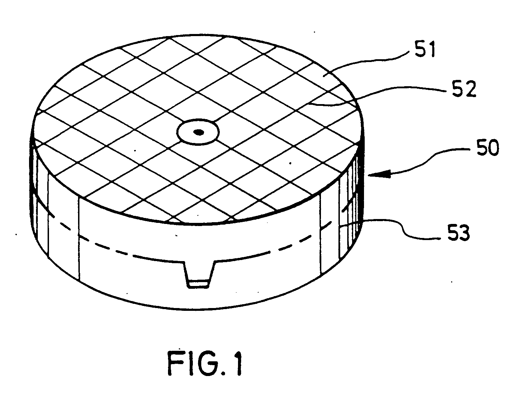

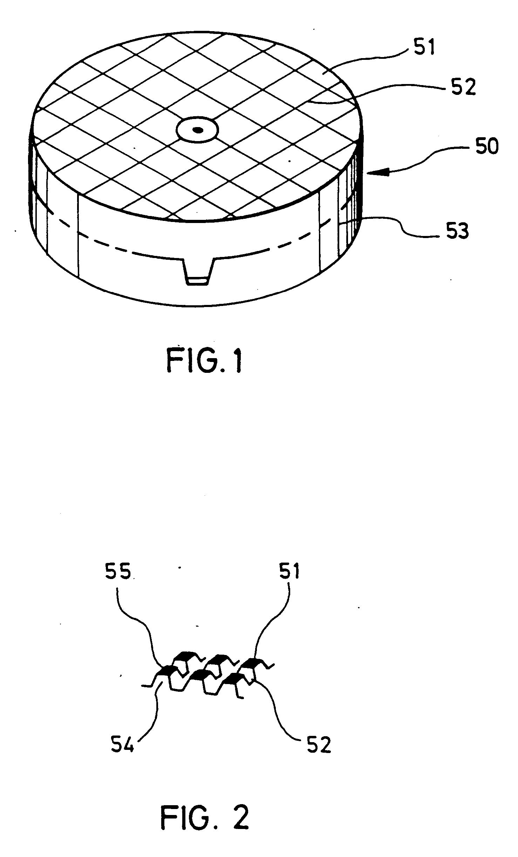

Bei der in Fig. 1 gezeigten Ausgestaltung ruht eine in der Draufsicht runde Palette 50 auf einem entsprechenden, ebenfalls in der Draufsicht runden Träger 53.

Nach dem Grundformen der Palette 50 durch Metalldruckgießen oder Sintern der Palette 50 aus Leichtmetall, Messing, einer Zinklegierung oder einem Sintermaterial wird ein Furchenmuster 52 in die Auflagefläche eingearbeitet. Die Ausgestaltung des Furchenmusters kann gleichzeitig mit dem Metalldruckgießen bzw. Sintern der Palette geschehen, jedoch auch in einem nachfolgendem Bearbeitungsschritt vorgenommen werden.

Durch das regelmäßige Furchenmuster 52 wird der prominente Teil der Auflagefläche 51 aus einer Mehrzahl von pyramidenstumpfförmigen Einzelkörpern 54 gebildet. Die Deckfläche der pyrammidenstumpfförmigen Einzelkörper 54 bildet eine Vielzahl von möglichen Anlageflächen 55, mit einem Werkstück.

In einem nächsten Herstellungsschritt wird die Palette 50 dadurch kalibriert, daß sie mit den Deckflächen der pyramidenstumpfförmigen Einzelkörper 54 gegen ein planes Kalibrierwerkzeug gedrückt wird, wodurch die Palette 50 im Bereich dieser Deckflächen 55 eine plastische Verformung und Kalibrierung erfährt.

Vor oder nach dem Herstellungsschritt des Kalibrierens kann eine Oberflächenvergütung durch Oberflächenbeschichtung mit einem harten Material, wie beispielsweise durch Vernickeln, vorgenommen werden.

Vor oder nach dem Herstellungsschritt des Kalibrierens kann die Oberfläche der Palette zumindest im Bereich ihrer Anlageflächen 51 durch eine Oberflächenbehandlung weiter verfestigt werden, die durch Aufbringen einer verglichen mit dem Material der Palette harten metallischen Oberflächenbeschichtung erfolgen kann.

Eine mögliche Oberflächenbehandlung der Palette ist das Eloxieren.

Ebenfalls kann die Oberflächenbehandlung ein Kugelpolieren oder Kugelstrahlen der Palette zumindest im Bereich ihrer Anlageflächen beinhalten.

Wie oben erwähnt, besteht die Palette vorzugsweise aus Leichtmetall, aus Messing, aus einer Zinklegierung oder aus einem Sintermaterial bzw. aus Kunststoff. Vorzugsweise wählt man jedoch als Palettenmaterial Aluminium oder eine Aluminiumlegierung.

Bei dem Gießen der Palette im Bereich der möglichen Anlageflächen mit dem Werkstück wird diese mit einer Genauigkeit von etwa 10 bis 50 Mikrometer, üblicherweise etwa 20 Mikrometer, gegossen. Die durch die plastische Verformung erzielte Formgenauigkeit der Anlageflächen durch das Kalibrieren liegt zwischen 1 und 5 Mikrometer, vorzugsweise bei etwa 3 Mikrometer.

In Abweichung von den oben genannten Oberflächenbehandlungen kann auch eine Oberflächenbeschichtung durch Vernickeln erfolgen.

Während des Verfahrensschrittes des Kalibrierens erfolgt im Laufe der plastischen Verformung der Anlageflächen eine Verdichtung des Palettenmaterials im Bereich der Anlageflächen. Diese Verdichtung führt an sich bereits zu einer ausreichenden Härte der Palette. Wie erwähnt, kann diese jedoch durch Oberflächenbehandlung weiter gesteigert werden.

## Patentansprüche

1. Verfahren zum Herstellen einer Palette mit einer im wesentlichen ebenen Auflagefläche, die zum Aufnehmen von Werkstücken geeignet ist, gekennzeichnet durch folgende Herstellungsschritte:
- Druckgießen beziehungsweise Sintern der Palette (50) aus einem Leichtmetall, aus Messing, aus einer Zinklegierung, aus einem Sintermaterial oder aus Kunststoff;
- Ausbilden eines Furchemusters (52) in der Auflagefläche (51) zum Bilden einer Mehrzahl von durch das Furchenmuster (52) unterteilten, möglichen Anlageflächen mit dem Werkstück; und
- Kalibrieren der Palette (50) zumindest im Bereich von gewünschten, möglichen Anlageflächen (51) mit dem Werkstück durch Eindrücken der Palette (50) in ein Kalibrierwerkzeug, das aus einem bezüglich des Materials der Palette (50) harten Material besteht, wobei die Palette (50) zumindest im Bereich ihrer Anlageflächen (51) eine plastische Materialverformung erfährt.

2. Verfahren nach Anspruch 1, dadurch gekennzeichnet,
daß vor oder nach dem Herstellungsschritt des Kalibrierens die Oberfläche der Palette (50) zumindest im Bereich ihrer Anlageflächen durch eine Oberflächenbehandlung weiter verfestigt wird.

3. Verfahren nach Anspruch 2, dadurch gekennzeichnet,
daß die Oberflächenbehandlung das Aufbringen einer verglichen mit dem Material der Palette harten metallischen Oberflächenbeschichtung beinhaltet.

4. Verfahren nach Anspruch 2, dadurch gekennzeichnet,
daß die Oberflächenbehandlung das Eloxieren der Palette (50) beinhaltet.

5. Verfahren nach Anspruch 2, dadurch gekennzeichnet,
daß die Oberflächenbehandlung ein Kugelpolieren oder Kugelstrahlen der Palette (50) zumindest im Bereich ihrer Anlageflächen (51) beinhaltet.

6. Verfahren nach einem der Ansprüche 1 bis 5, dadurch gekennzeichnet,
daß das Leichtmetall Aluminium oder eine Aluminiumlegierung ist.

7. Verfahren nach einem der Ansprüche 1 bis 6, dadurch gekennzeichnet,
daß die Palette (50) beim Gießen im Bereich der Anlageflächen (51) mit einer Genauigkeit von etwa 10 bis 50 Mikrometer, üblicherweise etwa 20 Mikrometer, gegossen wird, und
daß die Formgenauigkeit der Anlageflächen (51) nach deren plastischer Verformung durch das Kalibrieren in dem Bereich zwischen 1 und 5 Mikrometer, üblicherweise etwa 3 Mikrometer, liegt.

8. Verfahren nach einem der Ansprüche 1 bis 3, dadurch gekennzeichnet,
daß die Oberflächenbeschichtung durch Vernickeln erzeugt wird.

9. Verfahren nach einem der Ansprüche 1 bis 8, dadurch gekennzeichnet,
daß bei dem Verfahrensschritt des Kalibrierens während der plastischen Verformung der Anlageflächen (51) eine Verdichtung des ersten Materials im Bereich der Anlageflächen erfolgt.

## Claims

1. A method of manufacturing a pallet with a substantially flat contact surface suitable for receiving workpieces, characterised by the following manufacturing steps:
- die casting and/or sintering of the pallet (50) from a light metal, from brass, from a zinc alloy, from a sintered material or from plastics material;
- formation of a pattern of grooves (52) in the contact surface (51) in order to form a plurality of possible contact surfaces with the workpiece, these contact surfaces being divided by the groove pattern (52);
- calibration of the pallet (50), at least in the region of desired possible contact surfaces (51) with the workpiece, by pressing the pallet (50) into a calibrating tool consisting of a material which is hard in relation to the material of the pallet (50), the pallet (50) undergoing plastic deformation, at least in the region of its contact surfaces (51).

2. A method according to Claim 1, characterised in that, before or after the calibration step, the surface of the pallet (50) is hardened further by a surface treatment, at least in the region of its contact surfaces.

3. A method according to Claim 2, characterised in that the surface treatment involves the application of a metallic surface coating which is hard in comparison with the material of the pallet.

4. A method according to Claim 2, characterised in that the surface treatment involves anodic oxidation of the pallet (50).

5. A method according to Claim 2, characterised in that the surface treatment involves shot polishing or shot peening of the pallet (50), at least in the region of its contact surfaces (51).

6. A method according to any one of Claim 1 to 5, characterised in that the light metal is aluminium or an aluminium alloy.

7. A method according to any one of Claims 1 to 6, characterised in that, during casting, the pallet (50) is cast with an accuracy of approximately 10 to 50 micrometers, usually approximately 20 micrometers, in the region of the contact surfaces (51), and in that, after they have been deformed plastically by the calibration, the accuracy of shape of these contact surfaces (51) is in the range of 1 to 5 micrometers, usually approximately 3 micrometers.

8. A method according to any one of Claims 1 to 3, characterised in that the surface coating is produced by nickeling.

9. A method according to any one of Claims 1 to 8, characterised in that the first material is compressed in the region of the contact surfaces (51) whilst the latter are being deformed plastically dig the calibration step.

## Revendications

1. Procédé de fabrication d'une palette avec une surface de pose, pratiquement plane, convenant pour recevoir des pièces façonnées, caractérisé par les étapes de fabrication suivantes:
- moulage sous pression, ou frittage de la palette (50), en métal léger, laiton, alliage à base de zinc, matériau fritté ou en matière synthétique;
- réalisation d'un modèle de sillons (52) dans la surface de pose (51), pour former une pluralité de surfaces de pose possibles de la pièce façonnée, subdivisées selon le modèle de sillons (52); et
- calibrage de la palette (50), au moins dans la zone de surface d'appui (51) possible souhaitée avec la pièce, par pressage de la palette (50) dans un outil de calibrage, composé en un matériau dur par rapport au matériau de la palette (50), la palette (50) subissant une déformation plastique de son matériau, au moins dans la zone de ses surfaces d'appui (51).

2. Procédé selon la revendication 1, caractérisé en ce que avant ou après l'étape de fabrication du calibrage, la surface de la palette (50) est soumise à une rigidification supplémentaire au moyen d'un traitement de surface, au moins dans la zone de ses surfaces d'appui.

3. Procédé selon la revendication 2, caractérisé en ce que le traitement de surface comprend l'application d'un revêtement de surface métallique, dur en comparaison du matériau de la palette.

4. Procédé selon la revendication 2, caractérisé en ce que le traitement de surface comprend l'anodisation de la palette (50).

5. Procédé selon la revendication 2, caractérisé en ce que le traitement de surface est un polissage par billes ou un grenaillage de la palette (50), au moins dans la zone de ses surfaces d'appui (51).

6. Procédé selon l'une des revendications 1 à 5, caractérisé en ce que le métal léger est l'aluminium ou un alliage d'aluminium.

7. Procédé selon l'une des revendications 1 à 6, caractérisé:
- en ce que la palette (50) présente, lors du moulage, une précision, dans la zone des surfaces d'appui (51), d'à peu près 10 à 50 µm, usuellement d'à peu près 20 µm, et
- en ce que la précision de forme des surfaces d'appui (51), après leur déformation plastique, est amenée, par le calibrage, dans la plage comprise entre 1 et 5 µm usuellement autour de 3 µm.

8. Procédé selon l'une des revendications 1 à 3, caractérisé en ce que le revêtement de surface est produit par nickelage.

9. Procédé selon l'une des revendications 1 à 8, caractérisé en ce que, dans l'étape de procédé de calibrage, s'effectue, pendant la déformation plastique des surfaces d'appui (51), un compactage du premier matériau, dans la zone des surfaces d'appui.
